# EUROPÄISCHE PATENTSCHRIFT

(11) **EP 2 076 908 B1**
(45) Veröffentlichungstag und Bekanntmachung des Hinweises auf die Patenterteilung: **29.06.2016**
(21) Anmeldenummer: 07734996.7
(22) Anmeldetag: 04.07.2007
(51) Int. Cl.: H01B 17/30

(54) **ELEKTRISCHE DURCHFÜHRUNG, INSBESONDERE FÜR DRUCKANWENDUNGEN, SOWIE VERFAHREN ZUM HERSTELLEN EINER SOLCHEN DURCHFÜHRUNG**
ELECTRICAL BUSHING, IN PARTICULAR FOR PRESSURE APPLICATIONS, AND METHOD FOR PRODUCING SUCH A BUSHING
TRAVERSEE ELECTRIQUE, NOTAMMENT POUR DES APPLICATIONS DE PRESSION, ET PROCEDE DE FABRICATION D'UNE TELLE TRAVERSEE

(30) Priorität: 10.10.2006 DE 102006048151; 20.11.2006 DE 102006054843; 15.02.2007 DE 102007007498
(43) Veröffentlichungstag der Anmeldung: 08.07.2009
(73) Patentinhaber: BC Tech Holding AG, 7000 Chur (CH)
(72) Erfinder: HARTL, Helmut, 1210 Wien (AT)
(74) Vertreter: Glück Kritzenberger Patentanwälte PartGmbB
(86) Internationale Anmeldenummer: PCT/IB2007/001987
(87) Internationale Veröffentlichungsnummer: WO 2008/044105

(56) Entgegenhaltungen:
- DE-A1- 3 720 061

## Beschreibung

Die Erfindung bezieht sich auf eine elektrische Durchführung gemäß Oberbegriff Patentanspruch 1 sowie auf ein Verfahren gemäß Oberbegriff Patentanspruch 15.

Elektrische Durchführungen, insbesondere auch in ihrer Ausbildung als Glas-Metall-Durchführungen, sind bekannt und dienen beispielsweise dazu, eine elektrische Verbindung zwischen zwei getrennten Räumen herzustellen, in denen unterschiedliche Bedingungen beispielsweise hinsichtlich Druck, Temperatur, Atmosphäre oder hinsichtlich anderer die Räume ausfüllender Medien usw. bestehen.

Insbesondere bei Druckanwendungen, bei welchen zwischen den Gehäuseseiten, aus denen die elektrischen Leiter der Durchführungen herausgeführt sind, eine hohe Druckdifferenz anliegt, sind u.a. das die Leiter in den Gehäusen fixierende und die Gehäusedurchlässe verschließende Material (Glaskörper), aber auch der Übergang dieses Materials und dem jeweiligen Gehäuse einer hohen mechanischen Belastung ausgesetzt. Dies gilt in verstärktem Maße bei Anwendungen mit wechselnden Drücken.

Beispielsweise offenbart die DE 37 20 061 A1 eine Stromdurchführung für Drücke größer als 1000 bar und für Hochdruckbehälter. Die Stromdurchführung weist einen in die Behälterwand einsetzbaren Durchführungskörper auf, durch den die durchzuführenden Stromleiter abgedichtet vom Behälterinneren zur Behälteraußenseite geführt werden. Ein aus flächig aufeinanderliegenden und gasdicht miteinander verbundenen keramischen Trägerteilen bestehender Leiterträger ist in dem Durchführungskörper, und zwar durch diesen hindurchgreifend, montiert. Als flächenhafte Leitungszüge ausgebildete Stromleiter sind auf den Trägerteilen vorgesehen und erstrecken sich durch den Leiterträger.

Aufgabe der Erfindung ist es, eine elektrische Durchführung aufzuzeigen, die insbesondere für Druckanwendungen auch bei extrem hohem Drücken geeignet ist. Zur Lösung dieser Aufgabe ist eine Durchführung entsprechend dem Patentanspruch 1 ausgebildet. Ein Verfahren zum Herstellen einer solche Durchführung ist Gegenstand des Patentanspruchs 15.

Eine Besonderheit der Erfindung besteht darin, dass der Gehäusedurchlass zumindest im Bereich einer ersten Gehäuseseite, welche im Anwendungsfall die mit dem Druck belastete Gehäuseseite (nachstehend auch druckbelastete Gehäuseseite oder Druckseite) ist, wenigstens zwei Mündungen an einem eine Gehäuseachse nach Art einer Mantelfläche umschließenden Abschnitt der Gehäuseaußenfläche bildet, und dass der wenigstens eine Leiter an der ersten Gehäuseseite bezogen auf die Gehäuseachse radial aus dem Gehäuse vorsteht.

Die wenigstens zwei Mündungen sind dabei bevorzugt flächengleich oder im Wesentlichen flächengleich ausgebildet. Die wenigstens zwei Mündungen sind weiterhin in gleichmäßigen Winkelabständen um die Gehäuseachse versetzt, und zwar bevorzugt derart, dass sich die Achsen der Mündungen und damit auch die Kraftlinien der aus dem Druck an der Druckseite resultierenden Kräfte in einem gemeinsamen Punkt schneiden, vorzugsweise zusammen mit der Gehäuseachse.

Durch diese Ausbildung ergibt sich bei Druckanwendungen eine Kompensation der auf die Mündungen im Bereich der ersten bzw. druckseitigen Gehäuseseite einwirkenden Druckkräfte, insbesondere auch in der Weise, dass Kräfte, die aus dem Druck der Druckanwendung resultieren und auf das den Gehäusedurchlass verschließende Material einwirken, in Richtung zwischen der ersten und der zweiten Gehäuseseite, d.h. beispielsweise in Richtung der Gehäuseachse zumindest weitestgehend vermieden sind und hierbei insbesondere auch Kräfte oder Belastungen am Übergangsbereich zwischen dem den Gehäusedurchlass verschließenden Material und dem Gehäuse.

Unter einem die Gehäuseachse mantelflächenartig umschließenden Abschnitt der Gehäuseaußenfläche ist im Sinne der Erfindung jeder beispielsweise rotationssymmetrisch um die Gehäuseachse ausgebildete Umfangsabschnitt, wie z.B. ein zylinderförmiger, kegelstumpfförmiger Abschnitt, aber auch ein Umfangsabschnitt zu verstehen, an welchem die Gehäuseaußen- oder -umfangsfläche polygonartig ausgebildet ist, beispielsweise einen dreieckförmigen, rechteckförmigen, quadratischen oder einen vieleckförmigen Querschnitt besitzt. Wesentlich hierbei ist nur, dass sich die Kraftlinien der aus dem Druck einer Druckanwendung resultierenden und auf die Durchlassmündungen wirkenden Kräfte in einem gemeinsamen Punkt schneiden und hierdurch eine Kompensation der Kräfte erreicht wird.
Die Durchführung ist beispielsweise so ausgeführt, dass die wenigstens zwei Mündungen im Bereich der ersten Gehäuseseite mit ihrer Achse radial oder in etwa radial zur Gehäuseachse orientiert sind.
In Weiterbildung der Erfindung ist die Durchführung beispielsweise so ausgeführt dass der Gehäusedurchlass zumindest an der ersten Gehäuseseite mehr als zwei Mündungen aufweist,
oder
dass die Mündungen in einem Winkelabstand von 1/n360° um die Gehäuseachse gegeneinander versetzt vorgesehen sind, wobei n die Anzahl der Mündungen im Bereich der ersten Gehäuseseite ist,
oder
dass die Mündungen im Bereich der ersten Gehäuseseite flächengleich oder im Wesentlichen flächengleich sind,
oder
dass zumindest der die wenigstens zwei Mündungen aufweisende Teil des Gehäusedurchlasses vollständig mit dem diesen Durchlass dicht verschließenden Material ausgefüllt ist, wobei
der Gehäusedurchlass vorzugsweise bis auf einen kleinvolumigen Bereich an der zweiten Gehäuseseite vollständig mit dem den Gehäusedurchlass dicht verschließenden Material ausgefüllt ist.
Ferner ist die Durchführung in Weiterbildung der Erfindung beispielsweise so ausgeführt dass sich die Achsen der Mündungen in einem gemeinsamen Punkt, vorzugsweise in der Gehäuseachse schneiden,
oder
dass die Anzahl der Leiter gleich der Anzahl der Mündungen im Bereich der ersten Gehäuseseite ist,
oder
dass die Mündungen im Bereich der ersten Gehäuseseite jeweils von einer Bohrung oder einem Bohrungsabschnitt gebildet sind,
oder
dass der wenigstens eine Leiter auf seiner innerhalb des Gehäuses verlaufenden Länge abgewinkelt, vorzugsweise rechtwinklig oder im Wesentlichen rechtwinklig abgewinkelt ist,
oder
dass der wenigstens eine Leiter an der ersten Gehäuseseite bündig oder im Wesentlichen bündig mit dem Gehäuse abschließt,
oder
dass der Gehäusedurchlass von einer achsgleich mit der Gehäuseachse ausgebildeten Öffnung oder Bohrung und wenigstens einer in diese Längsöffnung oder Längsbohrung mündende weitere Bohrung gebildet ist.
In Weiterbildung der Erfindung ist die Durchführung beispielsweise so ausgeführt dass das den wenigstens einen Leiter im Gehäusedurchlass fixierende, den Gehäusedurchlass dicht verschließende Material ein Glaskörper ist,
oder
dass das Gehäuse aus Metall besteht,
oder
dass der Gehäusedurchlass an wenigstens einem Teil seiner Innenfläche glatt ausgebildet ist,
oder
dass der Gehäusedurchlass an wenigstens einem Teil seiner Innenfläche zur Verbesserung der Haftung des den Gehäusedurchlass &verschließenden Materials profiliert, beispielsweise aufgeraut oder mit einer Vielzahl von Vorsprüngen, beispielsweise auch in Form wenigstens eines Gewindes versehen ist. Beispielsweise bildet das Gehäuse an der ersten Gehäuseseite eine geschlossene stirnseitige Fläche beispielsweise zur Aufnahme von elektrischen und/oder mechanischen Bauelementen,
wobei die stirnseitige Fläche plan ausgebildet ist und beispielsweise in einer Ebene senkrecht zur Gehäuseachse liegt,
oder
wobei die stirnseitige Fläche dreidimensional geformt ist, beispielsweise als eine die Gehäuseachse umschließende Rotationsfläche.
Das Gehäuse ist vorzugsweise zumindest auf einer Teillänge hülsenförmig oder an seiner Umfangsfläche rotationssymmetrisch zur Gehäuseachse ausgebildet,
oder
die Durchführung ist Bestandteil eines elektrischen oder elektromechanischen Bauelementes, beispielsweise eines im Verwendungsfall mit hohem Druck beaufschlagten elektrischen oder elektromechanischen Bauelementes, z.B. eines Hochdruck-Sensors.
Die vorgenannten Merkmale können jeweils einzeln oder in beliebiger Kombination verwendet sein.

In Weiterbildung der Erfindung ist das Verfahren zum Herstellen einer elektrischen Durchführung beispielsweise so ausgeführt, dass ein Gehäuse verwendet wird, bei dem der wenigstens eine Gehäusedurchlass von der wenigstens einen ersten Bohrung sowie von wenigstens zwei in diese erste Bohrung mündenden und radial oder nahezu radial zu dieser ausgeführten zweiten Bohrung gebildet ist,
oder
dass der wenigstens eine Leiter so eingebracht wird, dass er mit wenigstens einem Ende aus dem Gehäuse vorsteht,
oder
dass der wenigstens eine Leiter so eingebracht wird, dass wenigstens ein Ende des Leiters bündig oder im Wesentlichen bündig mit einer Außenfläche des Gehäuses liegt,
oder
dass die Anzahl der in das Gehäuse eingesetzten Leiter so gewählt wird, dass in jeder zweiten Bohrung wenigstens ein Leiter mit seiner weiteren Teillänge aufgenommen ist, oder
dass zumindest ein Teil der Glasperlen auf den wenigstens einen Leiter aufgefädelt wird,
oder
dass die wenigstens eine zweite Bohrung von einer Querbohrung gebildet ist,
oder
dass die wenigstens eine erste Bohrung eine Längsbohrung ist,
wobei die vorgenannten Merkmale jeweils einzeln oder in beliebiger Kombination verwendet sein können.

Die Erfindung wird im Folgenden anhand der Figuren an einem Ausführungsbeispiel näher erläutert. Es zeigen:
- Fig. 1: in vereinfachter Darstellung und im Längsschnitt eine als Metall-Glas-Durchführung ausgebildete Durchführung gemäß der Erfindung;
- Fig. 2 u. 3: die Metall-Glas-Durchführung der Figur 1 in Vorderansicht (Figur 2) bzw. in Rückansicht (Figur 3);
- Fig. 4: in einer Darstellung ähnlich Figur 1 die die Metall-Glas-Durchführung bildenden Komponenten vor der Fertigstellung dieser Durchführung;
- Fig. 5: in vergrößerter Teildarstellung eine Mündung des Gehäusedurchlasses bei einer weiteren Ausführungsform der Erfindung.

Die in den Figuren allgemein mit 1 bezeichnete und als Metall-Glas-Durchführung ausgebildete Durchführung eignet sich speziell für Hochdruckanwendungen, beispielsweise für die elektrische Verbindung von in einem Druckraum angeordneten elektrischen Komponenten, wie z.B. Aktoren, Sensoren oder dgl., mit außerhalb des Druckraumes angeordneten elektrischen Komponenten oder Baugruppen, wobei der Druck im Druckraum beispielsweise der Druck wenigstens eines flüssigen, gasförmigen und/oder dampfförmigen Mediums ist und z.B. einige 1000bar beträgt, während der Druck außerhalb des Druckraumes beispielsweise Umgebungsdruck, d.h. ein Druck von etwa 1 bar ist. Die Durchführung 1 ist beispielsweise als Durchführung oder Basis für oder als Bestandteil von Hochdruck-Sensoren, z.B. in Kraftstoffeinspritz-Systemen oder Hydraulik-Systemen verwendbar.

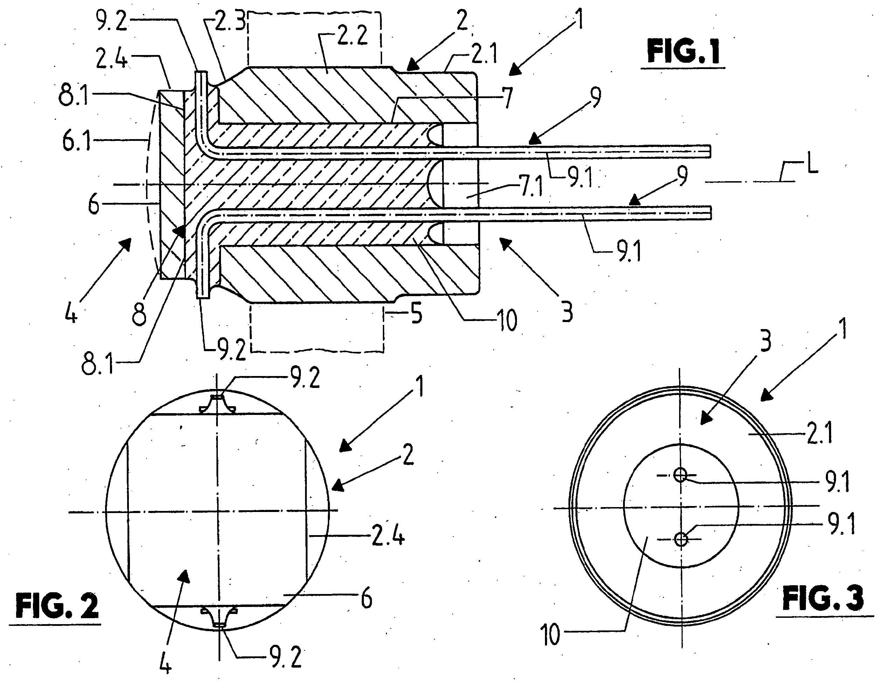

Im Einzelnen besteht die Durchführung aus einem Gehäuse 2 aus Metall, beispielsweise aus Stahl, welches bei der dargestellten Ausführungsform einstückig mit mehreren Gehäuseabschnitten 2.1-2.4 ausgebildet ist, die ausgehend von einer zweiten Gehäuseseite 3 der Durchführung 1 in einer Gehäuselängsrichtung L zur ersten Gehäuseseite 4 der Durchführung 1 aneinander anschließen. An dem der zweiten Gehäuseseite 3 unmittelbar benachbarten Gehäuseabschnitt 2.1 sowie an dem hieran anschließenden Gehäuseabschnitt 2.2 besitzt das Gehäuse 2 bei der dargestellten Ausführungsform jeweils eine kreiszylinderförmige Umfangsfläche, wobei der Gehäuseabschnitt 2.2 beispielsweise mit einem Außengewinde versehen sein kann. An den Gehäuseabschnitt 2.2 anschließend ist die Gehäuseaußenfläche am Gehäuseabschnitt 2.3 sich kegelstumpfförmig verjüngend ausgebildet und geht dann in den Gehäuseabschnitt 2.4 über, an dem das Gehäuse 2 bei der dargestellten Ausführungsform einen quadratischen Querschnitt mit abgerundeten Eckbereichen aufweist (Figur 2) und der die erste Gehäuseseite 4 der Durchführung bildet. Mit dem Gehäuseabschnitt 2.2 ist die Durchführung 1 in einer den Druckraum bildenden und diesen beispielsweise von der Umgebung trennenden Komponente 5 durch Einschrauben befestigbar. Auch andere Arten der Befestigung sind denkbar, z.B. Schweißen, Hartlöten usw. Bei der dargestellten Ausführungsform bildet der Gehäuseabschnitt 2.4 ein plane oder im Wesentlichen plane Stirnfläche 6, die in einer Ebene senkrecht zur Gehäuselängsachse L liegt und die zur Befestigung von elektrischen oder elektromechanischen Bauteilen oder Bauelementen geeignet ist.

Das Gehäuse 2 ist mit einer achsgleich mit der Gehäuselängsachse L ausgeführten Bohrung 7 versehen, die an der zweiten Gehäuseseite 3 offen und an der ersten Gehäuseseite 4 verschlossen ist, d.h. zwar durch die Gehäuseabschnitte 2.1 - 2.3, nicht aber durch den Gehäuseabschnitt 2.4 reicht. Im Gehäuseabschnitt 2.3 ist eine Querbohrung 8 eingebracht, deren Querschnitt kleiner ist als der Querschnitt der Längsbohrung 7 und deren Achse die Gehäuselängsachse L senkrecht schneidet. Die Querbohrung 8 bildet dadurch zwei Bohrungsabschnitte, die jeweils an der Außenfläche des Gehäuseabschnitts 2.3 offen sind, in die Längsbohrung 7 münden und mit ihren Achsen achsgleich zueinander sowie radial zur Gehäuselängsachse L orientiert sind.

Durch die Längsbohrung 7 und die Bohrungsabschnitte der Querbohrung 8 sind zwei jeweils von einem Leiter bzw. Draht aus einem elektrisch leitenden Material gebildete Leiter 9 hindurchgeführt, und zwar derart, dass jeder Leiter 9 mit dem Ende eines Leiterabschnitts 9.1 über die zweite Gehäuseseite 3 und mit dem Ende eines Leiterabschnitts 9.2 radial und achsgleich mit der Achse des jeweiligen Bohrungsabschnittes über den Umfang des Gehäuseabschnittes 2.3 wegsteht. Die beiden Leiter 9 sind hierfür innerhalb des Gehäuses 2 jeweils rechtwinklig abgebogen und im Übrigen bei der dargestellten Ausführungsform so angeordnet, dass die Leiterabschnitte 9.1 mit ihren Achsen in einer gemeinsamen, auch die Gehäuselängsachse L einschließenden Ebene und die Leiterabschnitte 9.2 mit ihren Achsen in einer gemeinsamen, senkrecht zur Gehäuselängsachse L orientierten Ebene liegen.

Zur mechanischen Fixierung der Leiter 9 im Gehäuse 2, zur elektrischen Isolierung der Leiter 9 gegeneinander und gegenüber dem Gehäuse 2 sowie zur Abdichtung des Gehäuses an den Bohrungen 7 und 8, ist im Gehäuse ein Glaskörper 10 vorgesehen, in welchem die Leiter 9 eingebettet sind und welcher die Bohrungsabschnitte der Querbohrung 8 sowie die Längsbohrung 7 bis auf einen relativ kurzen Abschnitt 7.1 an der Rückseite 3 vollständig ausfüllt.

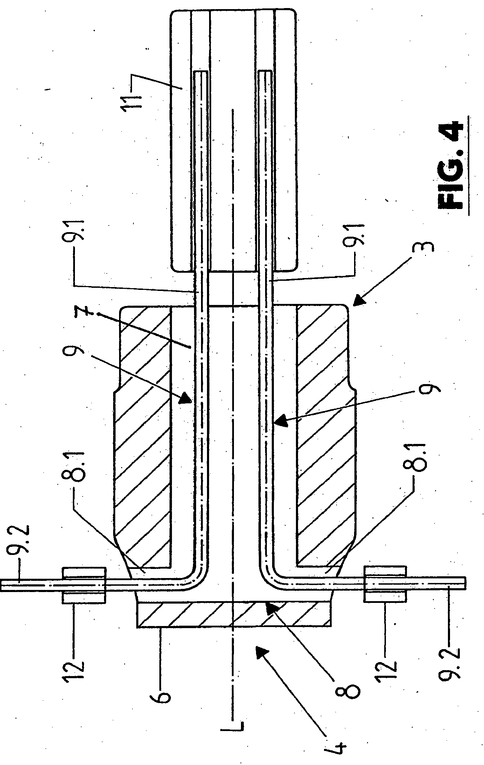

Die Herstellung des Glaskörpers 10 erfolgt entsprechend der Figur 4 unter Verwendung von drei Glasperlen 11 und 12. Die Glasperle 11, die an ihrer Umfangsfläche in etwa kreiszylinderförmig ausgebildet und an den Durchmesser der Längsbohrung 7 angepasst ist, wird in die Längsbohrung 7 eingebracht und hierbei mit zwei durchgehenden Bohrungen auf die Leiterabschnitte 9.1 aufgeschoben. Die Glasperlen 12, die an ihrer Umfangsfläche jeweils in etwa kreiszylinderförmig ausgebildet und an den Durchmesser der Querbohrung 8 angepasst sind, werden in jeweils einen Bohrungsabschnitt eingebracht und hierbei mit einer durchgehenden Bohrung auf einen Leiterabschnitt 9.2 aufgeschoben. Durch Erhitzen werden die Glasperlen 11 und 12 dann zu dem die Leiter 9 dicht umschließenden und auch dicht mit der Wandung der Längsbohrung 7 sowie der Bohrungsabschnitte verbundenen Glaskörper 10 verschmolzen.

Das Volumen der Glasperlen 11 und 12 ist so gewählt, dass diese den Innenraum des Gehäuses 2 bzw. den Gehäusedurchlass bis auf den Abschnitt 7.1 vollständig ausfüllenden Glaskörper 10 bilden. Um die Haftung des Glaskörpers 10 am Gehäuse 2 zu verbessern und um eine gleichmäßige Übertragung und Verteilung von Kräften zwischen dem Glaskörper 10 und dem Gehäuse 2 zu erreichen, sind die Flächen der Längsbohrung 7 und der Bohrungsabschnitte der Querbohrung 8 profiliert oder aufgerauht, und zwar beispielsweise durch eine mechanische Oberflächenbehandlung, wie z.B. durch eine material- oder spanabhebende Oberflächenbehandlung mit einem geeigneten Werkzeug, durch Sandstrahlen, Laserbehandlung usw. oder aber beispielsweise durch eine chemische Oberflächenbehandlung.

Ein wesentliches Merkmal der Durchführung 1 besteht darin, dass die Leiterabschnitte 9.2 einander gegenüberliegend und radial zur Gehäuselängsachse L aus dem Gehäuse 2 herausgeführt sind, und hierfür auch die Bohrungsabschnitte 8.1 bezogen auf die Gehäuselängsachse L einander gegenüberliegend vorgesehen sind, sodass sich eine Kompensation solcher Kräfte ergibt, die im Verwendungsfall aus dem Druck im Druckraum resultieren und auf den Gaskörper 10 im Bereich der Bohrungsabschnitte bzw. der Mündungen 8.1 des von den Bohrungen 7 und 8 gebildeten Gehäusedurchlasses einwirken, und dadurch der Glaskörper 10 insbesondere auch nicht mit in Gehäuselängsrichtung L wirkenden Kräften beaufschlagt wird.

Durch die beschriebene Ausbildung ergibt sich an der Vorderseite 4 auch die nicht von Leitern oder Leiterabschnitten durchdrungene Fläche 6, auf der dann die im Druckraum anzuordnenden Bauelemente oder Komponenten befestigt werden können, beispielsweise Aktoren, Sensoren usw. Durch die Reduzierung des Außenquerschnittes des Gehäuses 2 an den Gehäuseabschnitten 2.3 und 2.4 sowie insbesondere auch dadurch, dass die Leiterabschnitte 9.2 etwa im Bereich der Mitte zweier einander gegenüberliegender Querschnittsseiten des Gehäuseabschnittes 2.4 herausgeführt sind, können die Leiterabschnitte 9.2 zum Anschließen eines auf der Fläche 6 vorgesehenen Bauelementes oder einer dort vorgesehenen Baugruppe so abgebogen werden, dass diese Leiter nicht über den maximalen Umfang der Durchführung 1 vorstehen.

Wie in der Figur 1 mit der unterbrochenen Linie 6.1 angedeutet ist, kann die von dem Gehäuseabschnitte 2.4 gebildete Stirnseite z.B. zur Anpassung an den Druck, zur Druckableitung und/oder Druckverteilung und/oder zur Anpassung an andere Erfordernisse abweichend gestaltet sein, beispielsweise als Kegel, Kugelfläche usw.

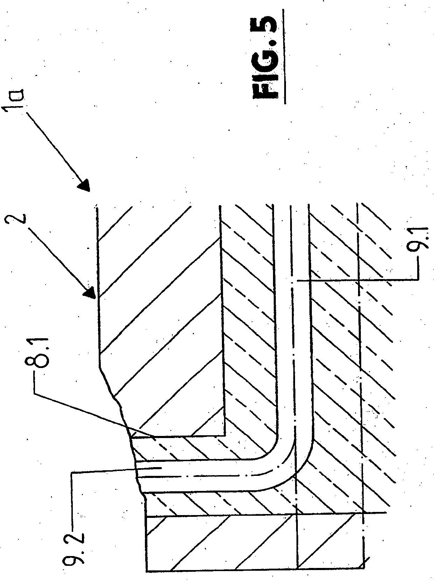

Die Figur 5 zeigt in vergrößerter Teildarstellung eine weitere Ausführungsform der erfindungsgemäßen Durchführung 1a im Bereich einer Mündung 8.1 bzw. im Bereich eines Bohrungsabschnittes der Querbohrung 8. Die Durchführung 1a der Figur 5 unterscheidet sich von der Durchführung 1 der Figur 1 im Wesentlichen dadurch, dass das Ende des Leiterabschnitts 9.2 bündig mit der von dem isolierenden Material bzw. Glaskörper gebildeten Außenfläche der Durchführung liegt.

Vorstehend ist die Rede von Bohrungen 7 bzw. 8 sowie Bohrungsabschnitten. Es versteht sich, dass hiermit nicht nur Bohrungen oder Bohrungsabschnitte im eigentlichen Sinne, sondern ganz allgemein im Gehäuse 2 ausgebildete Durchlässe oder Kanäle gemeint sind.

### Bezugszeichenliste

- 1, 1a: Durchführung
- 2: Gehäuse
- 2.1 - 2.4: Gehäuseabschnitt
- 3: zweite Gehäuseseite
- 4: erste Gehäuseseite
- 5: einen Druckraum bildende Komponente
- 6, 6.1: geschlossene Stirnfläche des Gehäuses 2
- 7: Längsbohrung
- 7.1: Abschnitt der Längsbohrung 7
- 8: Querbohrung
- 8.1: Mündung
- 9: Anschluss bzw. Leiter
- 9.1,9.2: Leiterabschnitt
- 10: Glaskörper
- 11, 12: Glasperle zum Herstellen des Glaskörpers 10

- L: Gehäuselängsachse

## Patentansprüche

1. Elektrische Durchführung, insbesondere für Druckanwendungen, mit einem vorzugsweise aus Metall gefertigten Gehäuse (2) mit wenigstens einem sich zumindest zwischen zwei von einander beabstandeten Gehäuseseiten (3, 4) erstreckenden Gehäusedurchlass (7, 8), mit wenigstens einem durch den Gehäusedurchlass (7, 8) hindurch geführten elektrischen Leiter (9), der in einem den Gehäusedurchlass (7, 8) zumindest zum großen Teil ausfüllenden und dicht verschließenden Material (10) eingebettet und/oder fixiert ist,
**dadurch gekennzeichnet,**
**dass** der Gehäusedurchlass (7, 8) an wenigstens einer ersten Gehäuseseite (4) zumindest zwei Mündungen (8.1) aufweist, die an einem eine Gehäuseachse (L) nach Art einer Mantelfläche umschließenden Abschnitt einer Gehäuseaußenfläche vorgesehen sind und dass der wenigstens eine Leiter (9) an der ersten Gehäuseseite (4) bezogen auf die Gehäuseachse (L) radial aus dem Gehäuse (2) vorsteht.

2. Durchführung nach Anspruch 1, **dadurch gekennzeichnet, dass** die wenigstens zwei Mündungen (8.1) im Bereich der ersten Gehäuseseite (4) mit ihrer Achse radial oder in etwa radial zur Gehäuseachse (L) orientiert sind.

3. Durchführung nach Anspruch 1 oder 2, **dadurch gekennzeichnet, dass** die Mündungen (8.1) in einem Winkelabstand von 1/n360° um die Gehäuseachse (L) gegeneinander versetzt vorgesehen sind, wobei n die Anzahl der Mündungen (8.1) im Bereich der ersten Gehäuseseite (4) ist.

4. Durchführung nach einem der vorhergehenden Ansprüche, **dadurch gekennzeichnet, dass** die Mündungen im Bereich der ersten Gehäuseseite (4) flächengleich oder im Wesentlichen flächengleich sind.

5. Durchführung nach einem der vorhergehenden Ansprüche, **dadurch gekennzeichnet, dass** zumindest der die wenigstens zwei Mündungen (8.1) aufweisende Teil des Gehäusedurchlasses (7, 8) vollständig mit dem diesen Durchlass dicht verschließenden Material (10) ausgefüllt ist,
wobei vorzugweise der Gehäusedurchlass (7, 8) bis auf einen kleinvolumigen Bereich (7.1) an der zweiten Gehäuseseite (3) vollständig mit dem den Gehäusedurchlass (7, 8) dicht verschließenden Material (10) ausgefüllt ist.

6. Durchführung nach einem der vorhergehenden Ansprüche, **dadurch gekennzeichnet, dass** sich die Achsen der Mündungen (8.1) in einem gemeinsamen Punkt, vorzugsweise in der Gehäuseachse (L) schneiden, oder dass die Anzahl der Leiter (9) gleich der Anzahl der Mündungen (8.1) im Bereich der ersten Gehäuseseite (4) ist, oder dass die Mündungen (8.1) im Bereich der ersten Gehäuseseite (4) jeweils von einer Bohrung (8) oder einem Bohrungsabschnitt (8.1) gebildet sind.

7. Durchführung nach einem der vorhergehenden Ansprüche, **dadurch gekennzeichnet, dass** der wenigstens eine Leiter (9) auf seiner innerhalb des Gehäuses (2) verlaufenden Länge abgewinkelt, vorzugsweise rechtwinklig oder im Wesentlichen rechtwinklig abgewinkelt ist.

8. Durchführung nach einem der vorhergehenden Ansprüche, **dadurch gekennzeichnet, dass** der wenigstens eine Leiter (9) an wenigstens einer Mündung (8.1) des Gehäusedurchlasses (7, 8) aus dem Gehäuse (2) vorsteht.

9. Durchführung nach einem der vorhergehenden Ansprüche, **dadurch gekennzeichnet, dass** der wenigstens eine Leiter (9) an der ersten Gehäuseseite (4) bündig oder im Wesentlichen bündig mit dem Gehäuse (2) abschließt.

10. Durchführung nach einem der vorhergehenden Ansprüche, **dadurch gekennzeichnet, dass** der Gehäusedurchlass von einer Achsgleich mit der Gehäuseachse (L) ausgebildeten Öffnung oder Bohrung (7) und wenigstens einer in diese Längsöffnung oder Längsbohrung (7) mündende weitere Bohrung (8, 8.1) gebildet ist, oder dass das den wenigstens einen Leiter (9) im Gehäusedurchlass (7, 8) fixierende, den Gehäusedurchlass dicht verschließende Material ein Glaskörper (10) ist.

11. Durchführung nach einem der vorhergehenden Ansprüche, **dadurch gekennzeichnet, dass** der Gehäusedurchlass (7, 8) an wenigstens einem Teil seiner Innenfläche zur Verbesserung der Haftung des den Gehäusedurchlass verschließenden Materials (10) profiliert ist.

12. Durchführung nach einem der vorhergehenden Ansprüche, **dadurch gekennzeichnet, dass** das Gehäuse (2) an der ersten Gehäuseseite (4) eine geschlossene stirnseitige Fläche (6, 6.1) bildet.

13. Durchführung nach einem der vorhergehenden Ansprüche, **dadurch gekennzeichnet, dass** die erste Gehäuseseite (4) im Anwendungsfall die mit Druck beaufschlagte Gehäuseseite ist.

14. Durchführung nach einem der vorhergehenden Ansprüche, **dadurch gekennzeichnet, dass** das Gehäuse (2) zumindest auf einer Teillänge hülsenförmig oder an seiner Umfangsfläche rotationssymmetrisch zur Gehäuseachse (L) ausgebildet ist.

15. Verfahren zum Herstellen einer elektrischen Durchführung (1, 1a), insbesondere für Druckanwendungen, mit einem Gehäuse (2) mit wenigstens einem Gehäusedurchlass (7, 8) mit wenigstens einem durch den Gehäusedurchlass (7, 8) hindurch geführten und beidendig an zwei von einander beabstandeten Gehäuseseiten (3, 4) aus jeweils einer Mündung (8.1) des Gehäusedurchlasses (7, 8) aus dem Gehäuse (2) vorstehenden elektrischen Leiter (9), der in einem den Gehäusedurchlass (7, 8) zumindest zum großen Teil ausfüllenden und dicht verschließenden Material (10) eingebettet und/oder fixiert ist, **gekennzeichnet durch** die Bereitstellung des Gehäuses (2) mit dem wenigstens einen Gehäusedurchlass, der von wenigstens einer sich in einer Gehäuseachse (L), vorzugsweise in einer Gehäuselängsachse (L) erstreckenden ersten Bohrung (7) sowie von wenigstens zwei in diese erste Bohrung (7) mündenden und radial oder nahezu radial zu dieser ausgeführten zweiten Bohrungen (8, 8.1) gebildet ist, **durch** Einbringen wenigstens eines Leiters (9) aus elektrisch leitendem Material derart, dass der Leiter (9) mit einer Teillänge in der ersten Bohrung (7) und mit einer abgewinkelten weiteren Teillänge (9.2) in der zweiten Bohrungen aufgenommen ist, **durch** Einsetzen jeweils wenigstens einer Glasperle (11, 12) in die Bohrungen (7, 8.1), und **durch** Verschmelzen der Glasperlen zu dem Glaskörper (10).

16. Verfahren nach Anspruch 15, **gekennzeichnet durch** die Verwendung eines Gehäuses (2), bei dem der wenigstens eine Gehäusedurchlass von der wenigstens einen ersten Bohrung (7) sowie von wenigstens zwei in diese erste Bohrung (7) mündenden und radial oder nahezu radial zu dieser ausgeführten zweiten Bohrung (8, 8.1) gebildet ist.

17. Verfahren nach Anspruch 15 oder 16, **dadurch gekennzeichnet, dass** der wenigstens eine Leiter (9) so eingebracht wird, dass er mit wenigstens einem Ende aus dem Gehäuse (2) vorsteht.

18. Verfahren nach einem der vorhergehenden Ansprüche, **dadurch gekennzeichnet, dass** die Anzahl der in das Gehäuse (2) eingesetzten Leiter (9) so gewählt wird, dass in jeder zweiten Bohrung (8.1) wenigstens ein Leiter (9) mit seiner weiteren Teillänge aufgenommen ist, oder dass zumindest ein Teil der Glasperlen (11, 12) auf den wenigstens einen Leiter (9) aufgefädelt wird, oder dass die wenigstens eine zweite Bohrung (8.1) von einer Querbohrung (8) gebildet ist, oder dass die wenigstens eine erste Bohrung eine Längsbohrung (7) ist.

## Claims

1. Electrical bushing, in particular for pressure applications, with a housing (2) preferably made from metal with at least one housing passage (7, 8) extending between two housing sides (3, 4) spaced apart from each other, with at least one electrical conductor (9) guided through the housing passage (7, 8), which is embedded and/or fixed in a material (10) which at least for the most part fills and tightly seals the housing passage (7, 8),
**characterized in that**
on at least a first housing side (4) the housing passage (7, 8) has at least one outlet (8.1) which is or are provided on a section of a housing outer surface enclosing a housing axis (L) in the manner of an outer jacket, and that the at least one conductor (9) protrudes radially from the housing (2) in relation to the housing axis (L) on the first housing side (4).

2. Bushing according to Claim 1,
**characterized in that**
at least two outlets (8.1) in the area of the first housing side (4) are oriented with their axis radially or approximately radially to the housing axis (L).

3. Bushing according to Claim 1 or 2,
**characterized in that**
the outlets (8.1) are offset relative to each other around the housing axis (L) by an angular distance of 1/n360°, where n is the number of outlets (8.1) in the area of the first housing side (4).

4. Bushing according to any one of the previous claims,
**characterized in that**
the outlets in the area of the first housing side (4) have equal surface areas or substantially equal surface areas.

5. Bushing according to any one of the previous claims,
**characterized in that**
at least the part of the housing passage (7, 8) comprising the at least two outlets (8.1) is completely filled with the material (10) which tightly seals this passage,
wherein apart from a region (7.1) of small volume on the second housing side (3), the housing passage (7, 8) is preferably completely filled with the material (10) which tightly seals this housing passage (7, 8).

6. Bushing according to any one of the previous claims,
**characterized in that**
the axes of the outlets (8.1) intersect in a common point, preferably in the housing axis (L), or that the number of conductors (9) is equal to the number of outlets (8.1) in the area of the first housing side (4), or that the outlets (8.1) in the area of the first housing side (4) are each formed by a bore (8) or bore section (8.1).

7. Bushing according to any one of the previous claims,
**characterized in that**
the at least one conductor (9) is angled on its length extending inside the housing (2), preferably angled at right angles or substantially at right angles.

8. Bushing according to any one of the previous claims,
**characterized in that**
the at least one conductor (9) protrudes from the housing (2) at at least one outlet (8.1) of the housing passage (7, 8).

9. Bushing according to any one of the previous claims,
**characterized in that**
the at least one conductor (9) on the first housing side (4) terminates flush or substantially flush with the housing (2).

10. Bushing according to any one of the previous claims,
**characterized in that**
the housing passage is formed by an opening or drilled hole (7) which is coaxial with the housing axis (L) and by at least one other bore (8, 8.1) which opens into this longitudinal opening or longitudinal bore (7), or that the material fixing the at least one conductor (9) in the housing passage (7, 8), tightly sealing the housing passage, is a glass body (10).

11. Bushing according to any one of the previous claims,
**characterized in that**
the housing passage (7, 8) is profiled on at least a part of its inner surface to improve the adhesion of the material (10) sealing the housing passage.

12. Bushing according to any one of the previous claims,
**characterized in that**
on the first housing side (4) the housing (2) forms a closed surface (6, 6.1) on the end face.

13. Bushing according to any one of the previous claims,
**characterized in that**
the first housing side (4) in the specific application is the pressurized side of the housing.

14. Bushing according to any one of the previous claims,
**characterized in that**
the housing (2) is implemented in the form of a sleeve over at least a part of its length or at its peripheral surface is rotationally symmetrical to the housing axis (L).

15. Method for producing an electrical bushing (1, 1a), in particular for pressure applications, with a housing (2) with at least one housing passage (7, 8) with at least one electrical conductor (9) which is guided through the housing passage (7, 8) and both ends of which protrude from the housing (2) on two housing sides (3, 4) spaced apart from each other, in each case from one outlet (8.1) of the housing passage (7, 8), and said conductor is embedded and/or fixed in a material (10) which at least for the most part fills and tightly seals the housing passage (7, 8),
**characterized by**
the provision of the housing (2) with the at least one housing passage which is formed by at least one first bore (7) extending in a housing axis (L), preferably in a longitudinal housing axis (L) and by at least one second bore (8, 8.1) which opens into this first bore (7) and is formed radially or nearly radially thereto, by the introduction of at least one conductor (9) made from electrically conductive material in such a way that a partial length of the conductor (9) is accommodated in the first bore (7) and a further angled partial length (9.2) in the second bore, by insertion of at least one glass bead (11, 12) into the bores (7, 8.1), and by fusion of the glass beads to the glass body (10).

16. Method according to Claim 215,
**characterized by**
the use of a housing (2), in which the at least one housing passage is formed by the at least one first bore (7) and by at least two second bores (8, 8.1) opening into this first bore (7) and formed radially or nearly radially thereto.

17. Method according to Claim 15 or 16,
**characterized in that**
the at least one conductor (9) is introduced such that at least one end protrudes out of the housing (2).

18. Method according to any one of the previous claims,
**characterized in that**
the number of conductors (9) inserted into the housing (2) is selected such that at least one conductor (9) is accommodated in every second bore (8.1) with its additional partial length, or that at least part of the glass beads (11, 12) are threaded onto the at least one conductor (9), or that the at least one second bore (8.1) is formed by a transverse bore (8), or that the at least one first bore is a longitudinal bore (7).

## Revendications

1. Traversée électrique, notamment pour applications de pression, comportant un logement (2) fabriqué de préférence en métal avec au moins un passage de logement (7,8) s'étendant entre deux côtés de logement (3,4) espacés l'un de l'autre, avec au moins un conducteur électrique (9) guidé à travers le passage de logement (7,8), qui est incorporé et/ou fixé dans un matériau remplissant (10) et obturant de manière étanche le passage de logement (7,8) au moins en grande partie,
**caractérisée en ce que**
le passage de logement (7,8) présente sur au moins un premier côté de logement (4) au moins deux embouchures (8.1), qui sont prévues sur une portion d'une surface extérieure de logement entourant un axe de logement (L) à la manière d'une surface de gaine et **en ce que** au moins un conducteur (9) dépasse en saillie radialement sur le premier côté de logement (4) à partir du logement (2) par rapport à l'axe de logement (L).

2. Traversée selon la revendication 1, **caractérisée en ce que** les au moins deux embouchures (8.1) sont orientées au niveau du premier côté de logement (4) avec leur axe radialement ou approximativement radialement par rapport à l'axe de logement (L).

3. Traversée selon la revendication 1 ou 2, **caractérisée en ce que** les embouchures (8.1) sont prévues en décalage l'une par rapport à l'autre dans un écart angulaire de 1/n360° autour de l'axe de logement (L), dans lequel n est le nombre d'embouchures (8.1) dans le domaine du premier côté de logement (4).

4. Traversée selon une des revendications précédentes, **caractérisée en ce que** les embouchures dans le domaine du premier côté de logement (4) sont coextensives ou essentiellement coextensives.

5. Traversée selon une des revendications précédentes, **caractérisée en ce que** au moins la partie du passage de logement (7,8) présentant les au moins deux embouchures (8.1) est remplie en totalité par le matériau (10) obturant de manière étanche ce passage,
dans laquelle de préférence le passage de logement (7,8) est rempli jusqu'à une zone à petit volume (7.1) sur le deuxième côté de logement (3) en totalité avec le matériau (10) obturant de manière étanche le passage de logement (7,8).

6. Traversée selon une des revendications précédentes, **caractérisée en ce que** les axes des embouchures (8.1) se coupent en un point commun, de préférence dans l'axe de logement (L), ou **en ce que** le nombre de conducteurs (9) est identique au nombre d'embouchures (8.1) dans le domaine du premier côté de logement (4) ou **en ce que** les embouchures (8.1) dans le domaine du premier côté de logement (4) sont formées respectivement par un alésage (8) ou une portion d'alésage (8.1).

7. Traversée selon une des revendications précédentes, **caractérisée en ce que** l'au moins conducteur (9) est coudé sur sa longueur s'étendant à l'intérieur du logement (2), de préférence est coudé à angle droit ou essentiellement à angle droit.

8. Traversée selon une des revendications précédentes, **caractérisée en ce que** l'au moins conducteur (9) dépasse en saillie à partir du logement (2) sur au moins une embouchure (8.1) du passage de logement (7,8).

9. Traversée selon une des revendications précédentes, **caractérisée en ce que** l'au moins conducteur (9) aboutit au premier côté de logement (4) au ras ou essentiellement au ras du logement (2).

10. Traversée selon une des revendications précédentes, **caractérisée en ce que** le passage de logement est formé par une ouverture ou un alésage (7) réalisé sur le même axe que l'axe de logement (L) et au moins un alésage supplémentaire, (8,8.1) débouchant dans cette ouverture longitudinale ou alésage oblong (7) ou en ce que le matériau obturant de manière étanche le passage de logement et fixant l'au moins conducteur (9) dans le passage de logement (7,8) est un corps de verre (10).

11. Traversée selon une des revendications précédentes, **caractérisée en ce que** le passage de logement (7,8) est profilé sur au moins une partie de sa surface intérieure afin d'améliorer l'adhérence du matériau (10) obturant le passage de logement.

12. Traversée selon une des revendications précédentes, **caractérisée en ce que** le logement (2) forme sur le premier côté de logement (4) une surface frontale fermée (6 ,6.1).

13. Traversée selon une des revendications précédentes, **caractérisée en ce que** le premier côté de logement (4) est dans le cas d'application le côté de logement sollicité par une pression.

14. Traversée selon une des revendications précédentes, **caractérisée en ce que** le logement (2) est réalisé au moins sur une longueur partielle en forme de manchon ou sur sa surface circonférentielle symétriquement en rotation par rapport à l'axe de logement (L).

15. Procédé de fabrication d'une traversée électrique (1,1a) notamment pour des applications de pression, comportant un logement (2) avec au moins un passage de logement (7,8) avec au moins un conducteur électrique (9) guidé à travers le passage de logement (7,8) et dépassant en saillie à partir du logement (2) aux deux extrémités sur deux côtés de logement (3,4) espacés l'un de l'autre d'une embouchure respective (8.1) du passage de logement (7,8), qui est incorporé et/ou fixé dans un matériau (10) remplissant et obturant de manière étanche le passage de logement (7,8) au moins en grande partie, **caractérisé par** la fourniture du logement (2) avec au moins un passage de logement, qui est formé par au moins un premier alésage (7) s'étendant dans un axe de logement (L), de préférence dans un axe longitudinal de logement (L) ainsi qu'au moins deux deuxièmes alésages (8,8.1) débouchant dans ce premier logement (7) et conçus radialement ou approximativement radialement par rapport à celui-ci, en insérant au moins un conducteur (9) constitué d'un matériau électriquement conducteur de telle sorte que le conducteur (9) soit renfermé par une longueur partielle dans le premier alésage (7) et par une longueur partielle supplémentaire coudée (9.2), en insérant respectivement au moins une perle de verre (11,12) dans les alésages (7,8.1) et en fondant les perles de verre en un corps de verre (10).

16. Procédé selon la revendication 15, **caractérisé par** l'utilisation d'un logement (2), dans lequel l'au moins passage de logement est formé par au moins un premier alésage (7) ainsi qu'au moins deux alésages (8,8.1) débouchant dans ce premier alésage (7) et réalisés radialement ou approximativement radialement par rapport à celui-ci.

17. Procédé selon la revendication 15 ou 16, **caractérisé en ce que** l'au moins conducteur (9) est disposé de telle sorte qu'il dépasse en saillie par au moins une extrémité hors du logement (2).

18. Procédé selon une des revendications précédentes, **caractérisé en ce que** le nombre de conducteurs (9) insérés dans le logement (2) est choisi de telle sorte que dans chaque deuxième alésage (8.1) au moins un conducteur (9) soit renfermé par sa longueur partielle supplémentaire, ou **en ce que** au moins une partie des perles de verre (11,12) est enfilée sur l'au moins conducteur (9), ou en ce que l'au moins deuxième alésage (8.1) est formé par un alésage transversal (8) ou **en ce que** l'au moins premier alésage est formé par un alésage oblong (7).
